(19) Europäisches Patentamt
European Patent Office
Office européen des brevets

(11) Veröffentlichungsnummer: **0 060 424**
**B1**

(12) # EUROPÄISCHE PATENTSCHRIFT

(45) Veröffentlichungstag der Patentschrift: **09.05.84**

(51) Int. Cl.³: **C 03 C 25/02**

(21) Anmeldenummer: **82101511.2**

(22) Anmeldetag: **27.02.82**

(54) **Schlichtemittel für Glasfasern.**

(30) Priorität: **12.03.81 DE 3109477**

(43) Veröffentlichungstag der Anmeldung: **22.09.82 Patentblatt 82/38**

(45) Bekanntmachung des Hinweises auf die Patenterteilung: **09.05.84 Patentblatt 84/19**

(84) Benannte Vertragsstaaten: **BE DE FR GB IT**

(56) Entgegenhaltungen:
**EP-A-0 027 942**
**FR-A-2 039 887**
**US-A-3 305 417**
**US-A-3 437 517**

(73) Patentinhaber: **BAYER AG, Konzernverwaltung RP Patentabteilung, D-5090 Leverkusen 1 Bayerwerk (DE)**

(72) Erfinder: **Hentschel, Karl-Heinz, Dr., Heckschenstrasse 89, D-4150 Krefeld (DE)**
Erfinder: **Zabrocki, Karl, Dr., Edelfalter 33, D-4044 Buettgen (DE)**
Erfinder: **Medem, Harald, Dr., Buschstrasse 167, D-4150 Krefeld (DE)**
Erfinder: **Eichenhofer, Kurt-Wilhelm, Dr., Paul-Klee-Strasse 52, D-5090 Leverkusen 1 (DE)**
Erfinder: **Tiburtius, Christoph, Dr., Auf dem Klemmberg 41, D-5000 Köln 50 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 060 424 B1

ACTORUM AG

## Beschreibung

Die vorliegende Erfindung betrifft neue Schlichtemittel für Glasfasern, die insbesondere zur Ausrüstung von Glasfasern dienen, die bei der Verstärkung von Kunststoffen mit hoher Wasserfestigkeit eingesetzt werden.

Schlichten bestehen in der Regel aus fünf Bestandteilen:

1. Filmbildner,
2. Gleitmittel,
3. Haftvermittler,
4. Additiven,
5. Träger (Wasser).

Der Filmbildner hat hierbei die Aufgabe, einen Film auf der Glasoberfläche zu bilden, der die Glasfaser gegen mechanische Beanspruchung stabilisiert und ausserdem die Verträglichkeit zwischen der Faser und dem organischen Polymer verbessert. Der chemische Aufbau dieses Bindemittels ist daher von entscheidender Bedeutung für die Verträglichkeit des Polymeren auf der Glasfaser und damit für die mechanischen Eigenschaften des aus der Glasfaser und dem organischen Polymeren bestehenden Verbundes.

Wegen der notwendigen guten Verträglichkeit zwischen der geschlichteten Glasfaser und den organischen Polymeren verwendet man häufig solche Materialien als Filmbildner, die in ihrem chemischen Aufbau dem mit der Glasfaser zu verstärkenden Polymeren ähnlich sind.

Der vorliegenden Erfindung liegt die Aufgabe zugrunde, Glasfaserschlichten bereitzustellen, welche zu glasfaserverstärkten Kunstharzen mit sehr hoher Wasserfestigkeit führen.

Gegenstand der vorliegenden Erfindung sind wässrige Schlichtemittel für Glasfasern, welche als Filmbildner in Wasser emulgierbare, mit Polyethereinheiten modifizierte Polyester enthalten, die dadurch gekennzeichnet sind, dass die Polyester 0,1–12 Gew.-%, bevorzugt 1–5 Gew.-% organisch gebundenen Schwefel, bezogen auf das Gesamtgewicht des fertigen Polyesters, in Form von Thioether-, Sulfoxid- oder Sulfonbrücken, enthalten.

Organisch gebundenen Schwefel enthaltende Filmbildner für Glasfaserschlichten wurden in der Literatur bisher nicht beschrieben. Es war daher nicht vorherzusehen, dass derartige Komponenten enthaltende Glasfaserschlichten die Fertigung glasfaserverstärkter Kunststoffe mit überragenden Wasserfestigkeiten ermöglichen. Besonders wertvoll ist die Gruppe mit Epoxyverbindungen modifizierter, organisch gebundenen Schwefel enthaltender Polyester, da in diesem Fall auch die mechanischen Eigenschaften daraus hergestellter glasfaserverstärkter Kunststoffe, wie z.B. ungesättigter Polyesterharze, Epoxyharze oder Thermoplasten, wie z.B. Polyolefine, Polyamide, Polycarbonate, Polyethylenterephthalate oder Polybutylenterephthalate, auf hohem Niveau liegen.

Um neben den genannten Wasserfestigkeiten der so gewonnenen glasfaserverstärkten Kunststoffe noch eine leichte Dispergierbarkeit und eine gute pH- und Elektrolytstabilität des Schlichtefilmbildners zu gewährleisten, erwies es sich als besonders zweckmässig, als Polyetherkomponenten 4–13 Gew.-% Polyethylenoxideinheiten mit Molgewichten zwischen 370 und 3000 und 25–60 Gew.-% Polypropylenoxideinheiten mit Molgewichten von 116–2000 in die erfindungsgemässen schwefelhaltigen (Epoxy-)Polyester mit einzukondensieren, wobei sich die Gewichtsmengen auf das Gesamtgewicht des fertigen Polyesters beziehen.

Steigt der Anteil der Polyethylenoxideinheiten über die genannten Grenzen, so nimmt der Grad der Wasserfestigkeit ab, sinkt er unter die genannte Untergrenze, so wird es immer schwieriger, den Filmbildner ohne Zuhilfenahme weiterer Massnahmen in Wasser zu dispergieren. Wählt man den Anteil der Polypropylenoxideinheiten ausserhalb der genannten Grenzen, so wird es zunehmend schwieriger, die mit derartigen Filmbildnern beschlichteten Glasfaserstränge optimal zu verarbeiten. Es kommt zu starkem Flusen der Stränge beim Aufwickeln, zu Fädenrissen und Einbrechen von Glasfaserlagen im Spinnkuchen (Cake). Ähnliches gilt für das Unterschreiten der genannten Molekulargewichtsuntergrenzen der Polyethylenoxid- bzw. Polypropylenoxidblöcke.

Die erfindungsgemässen Polyesterharze werden durch Veresterung von gegebenenfalls polyethylenoxid-, polypropylenoxid- bzw. schwefelhaltigen Polyalkoholen und Dicarbonsäuren oder deren veresterungsfähigen Derivaten sowie gegebenenfalls Monocarbonsäuren in an sich bekannter Weise (vgl. dazu Houben-Weyl, Methoden der Organischen Chemie, Stuttgart, 1963, Be. 14/2, S. 1–5, 21–33, 40–44; C.R. Martens, Alkyd Resins, Reinhold Publ. Comp., 1961, Reinhold Plastics App. Ser., S. 51–59) bis auf Säurezahlen von 2–60, bevorzugt 5–20 mg KOH/g erhalten.

Zur Herstellung der epoxymodifizierten Variante der Polyester weden 60–97 Gew.-%, bezogen auf das Gesamtgewicht des fertigen Filmbildnerharzes, der bis auf Säurezahlen von 5–50, bevorzugt 10–30 mg KOH/g aufkondensierten Polyester, mit 3–40 Gew.-% einer mehr als eine Epoxygruppe im Molekül enthaltenden Verbindung bei Temperaturen zwischen 20 und 200°C, bevorzugt zwischen 80 und 150°C, derart umgesetzt, dass restliche Epoxygruppen im Epoxypolyesterharz verbleiben. Veresterung und Epoxyaddition können in einer oder mehreren Stufen durchgeführt werden. Es ist auch möglich, auf Säurezahlen unter 10 mg KOH/g aufkondensierte Polyester mit einem Dicarbonsäureanhydrid zunächst «aufzusäuern» bis auf Säurezahlwerte zwischen 10 und 50 mg KOH/g und danach die Epoxyaddition vorzunehmen. Nach der Epoxyaddition sollte sich eine Restsäurezahl von 0,5–20 bevorzugt von 4–10, einstellen.

Als zur Herstellung des Polyesterpräkondensats bevorzugt verwendete Polyalkohole seien genannt:

aliphatische, cycloaliphatische, ungesättigte oder gesättigte und/oder aromatische Polyole mit 2 bis 6 an nicht aromatische C-Atome gebundenen OH-Gruppen und 2–24 C-Atomen pro Molekül. Es können auch Additionsprodukte von Alkylenoxiden mit 2–10 C-Atomen pro Molekül oder von reaktionsfähigen Lactonen, wie z.b. Caprolacton, an solche Polyole eingesetzt werden. Neben den Polyalkoholen können auch noch bis zu 30 Mol-% (bezogen auf die Gesamtmolzahl aller verwendeten Alkohole) Monoalkohole enthalten sein.

So können als mehrwertige Alkohole zweiwertige aliphatische und cycloaliphatische Alkohole mit 2 bis 24 Kohlenstoffatomen, wie Ethylenglykol, Propylenglykol, Diethylenglykol, Dipropylenglykol, Butandiole, Neopentylglykol, Hexandiole, Perhydrobisphenole, 1,1-Dimethylolcyclohexan, 1,4-Dimethylolcyclohexan, Dimethyloltricyclo-[5,2,1,$0^{2,6}$]-decane oder alkoxylierte Bisphenole, sowie dreiwertige Alkohole, wie Glycerin, Trimethyloläthan, Trimethylolpropan oder Trimethylolhexan verwendet werden.

Die Polyethylenoxideinheiten können in die Polyester in Form von Polyethylenglykol, oxyethylierten Mono-, di- oder Polyalkoholen, oxyethylierten Mono-, di- oder Polyphenolen und/oder oxyethylierten Mono-, Di- oder Polycarbonsäuren eingebaut werden. Bevorzugt werden dabei Verbindungen mit mindestens zwei alkoholischen Hydroxylgruppen pro Molekül. Besonders bevorzugt werden Polyethylenglykole. Die mittleren Molekulargewichte der in der oben genannten Form vorliegenden Polyethylenoxideinheiten sollen im Bereich 370 bis 3000, bevorzugt zwischen 600 und 3000 liegen. Analog diesem Vorgehen kann man die Polypropylenoxideinheiten einführen. Bevorzugt werden diese jedoch einkondensiert durch Verwendung von Umsetzungsprodukten mehrwertiger Phenole mit 2–50 Mol Propylenoxid pro Äquivalent Phenol.

Als zur Herstellung des Polyesterpräkondensats bevorzugt verwendete Polycarbonsäuren seien genannt: aliphatische, cycloaliphatische, gesättigte oder ungesättigte und/oder aromatische Dicarbonsäuren mit 4–12 C-Atomen pro Molekül oder deren veresterungsfähige Derivate (z.B. Säureanhydride); daneben können noch bis zu 10 Mol-% (bezogen auf die Gesamtmolzahl der verwendeten Carbonsäuren) Monocarbonsäuren enthalten sein. Diese Dicarbonsäuren können sein: Phthalsäure (anhydrid), Isophthalsäure, Terephthalsäure, Hexahydrophthalsäure (anhydrid), Hexahydro-isophthalsäure, Hexahydro--terephthalsäure, Methyl-tetrahydrophthalsäure (anhydrid), Tetrahydro-phthalsäure (anhydrid), Endoethylen-tetrahydrophthalsäure (anhydrid), Endomethylentetrahydrophthalsäure (anhydrid), Tricyclo-[5,2,1,$0^{2,6}$]-decan-dicarbonsäure, Bernsteinsäure (anhydrid), $C_{1-8}$-Alkylbernsteinsäure (anhydrid), $C_{2-8}$-Alkenylbernsteinsäure (anhydrid), Glutarsäure (anhydrid), Adipinsäure, Korksäure, Azelainsäure, Sebazinsäure, Dodecandisäure, Bisphenol-A-bis-essigsäure, und Fumarsäure, wobei der Einsatz von Phthalsäure, Isophthalsäure, Hexahydrophthalsäure und Adipinsäure bevorzugt wird. Maleinsäure kann in untergeordneter Menge, höchstens jedoch bis zu 6 Gew.-%, bezogen auf das Gesamtgewicht des Polyesters, vorhanden sein.

Die Polyester können durch Einkondensation von bis zu 10 Mol-% aliphatischer, cycloaliphatischer, gesättigter oder ungesättigter und/oder aromatischer Monocarbonsäuren mit 6 bis 24 C-Atomen pro Molekül, wie z.B. Benzoesäure, Butylbenzoesäure und Hexahydrobenzoesäure, in an sich bekannter Weise modifiziert werden. In diesem Falle sollten jedoch monofunktionelle Alkohole nicht mitverwendet werden. Auch die Einkondensation von bis zu 20 Mol% drei- und vierwertiger Carbonsäuren, wie Trimellithsäure und Pyromellithsäure, anstatt der Dicarbonsäure ist möglich.

Die mehr als eine Epoxygruppe pro Molekül enthaltenden Verbindungen können sein:
Durch Umsetzung von Polyphenolen, wie z.B. Bisphenol A oder Novolaken mit Epichlorhydrin gewonnene Expoxyharze, durch Epoxidierung mehrfacher cycloaliphatischer oder aliphatischer Olefine, welche gegebenenfalls Ester- oder Etherbrücken enthalten, gewonnene mehrfache Epoxide, wie z.B. 3,4-Epoxycyclohexylmethyl-3,4-epoxycyclohexancarboxylat, Bis-(3,4-epoxycyclohexylmethyl)-maleat, Bis-(2,3-epoxycyclopentyl)-ether, Ethylenglykol-bis-(3,4-epoxycyclohexancarboxylat), 1,6-Hexandiol-bis-(3,4-epoxycyclohexancarboxylat), Limonendiepoxid, 1,2,5,6-Diepoxycyclooctan, Dicyclopentadiendiepoxid, Vinylcyclohexandiepoxid, Glycidylether von Bisphenol A und daraus abgeleitete Epoxyharze, Glycidylether von Novolaken, Glycidylester von Polycarbonsäuren, wie z.B. Phthalsäurebisglycidylester, Hexahydrophthalsäurebisglycidylester, Tetrahydrophthalsäurebisglycidylester, 4,5-Epoxy-tetrahydrophthalsäure-bisglycidylester, Epoxyderivate stickstoffhaltiger Heterocyclen, wie z.B. Trisglycidyl-cyanurat, Trisglycidyl-isocyanurat oder Bisglycidylhydantoine.

Der organisch gebundene Schwefel liegt in Form von Thioether-, Sulfoxid- oder Sulfongruppen, bevorzugt jedoch in Form von Thioetherbrücken vor. Diese schwefelorganischen Gruppen können in an die Alkohol-, Carbonsäure- oder Epoxykomponente chemisch gebundener Form in die erfindungsgemässen Polyester einkondensiert werden. Solche schwefelhaltigen Polyalkohole sind z.B. 2,2'-Thiobisethanol, Thio-bis(propanol), Addukte von 2 bis x Mol Monothiolen an 1-Mol-Verbindungen mit x Epoxygruppen pro Molekül ($x \geq 2$), Addukte von 2 bis x Mol Monothiophenolen an Verbindungen mit x Epoxygruppen pro Molekül ($x \geq 2$), Addukte von z Mol Monothiolen an 1 Mol Verbindungen und/oder Gemische mit x alkoholischen Hydroxyl- und y Epoxygruppen pro «Durchschnitts»-Molekül, wobei die Summe von x und y grösser oder gleich 2 und x + z grösser oder gleich 2 sein muss, Addukte von z Mol Monothiophenolen an 1 Mol-Verbindungen und/oder Gemische mit x alkoholischen Hydroxyl- und y Epoxygruppen pro «Durchschnitts»-Molekül, wobei die Summe von x und y grösser oder gleich und x + z grösser oder gleich 2 sein muss, Addukte von 1 Mol Dithiolen an 2 Mol Monoepoxyverbindungen, Addukte von 1 Mol Dithio-diphenolen an 2 Mol Monoepoxyverbindungen und/oder Addukte von Monoepoxiden, bevorzugt Ethylenoxid und Propylenoxid, an mehrkernige Di- oder Polyphenole mit Thioäther-, Sulfoxid- oder Sulfonbrücken zwischen den aromatischen Kernen. Schwefelhaltige Polycarbonsäuren sind z.B. 2,2′-Thiobisessigsäure, 2,2′-Thiobisporpionsäure, 3,3′-Thiobispropionsäure, 4,4′-Bis-(carboxymethoxyphenyl)-sulfid, 4,4′-Bis-(carboxymethoxy-phenyl)-sulfoxid, 4,4′-Bis-(carboxymethoxy-phenyl)-sulfon, $C_{1-20}$-Alkylthio-bernsteinsäuren, Addukte von difunktionellen Thiolen oder Thiophenolen an α,β-ungesättigte Carbonsäuren, 3,5-Dithio-pimelinsäure oder Thioketale von Keto-dicarbonsäuren. Als schwefelhaltige Epoxyverbindungen seien erwähnt:

4,4′-Bis-(glycidoxy-phenyl)-sulfid und daraus abgeleitete höherkondensierte Epoxyharze, aus 4,4′-Bis-(glycidoxy-phenyl)-sulfid und schwefelfreien Di- oder Polyphenolen abgeleitete Epoxyharze, 4,4′-Bis-(glycidoxy-phenyl)-sulfoxid und daraus abgeleitete höherkondensierte Epoxyharze, aus 4,4′-Bis-(glycidoxy-phenyl)-sulfoxid und schwefelfreien Di- oder Polyphenolen abgeleitete Epoxyharze, 4,4′-Bis-(glycidoxy-phenyl)-sulfon und daraus abgeleitete höherkondensierte Epoxyharze, aus 4,4′-Bis-(glycidoxy-phenyl)-sulfon und schwefelfreien Di- oder Polyphenolen abgeleitete Epoxyharze, aus mehr als einer schwefelhaltigen Diepoxyverbindung abgeleitete höherkondensierte Epoxyharze, 2,2′-Thiobisessigsäure-bisglycidylester, 3,5-Dithiopimelinsäure-diglycidylester und Diglycidylester von Ketondicarbonsäurethioketalen.

Der organisch gebundene Schwefel kann auch in Form von -C(O)-S-Brücken, also als Thiolcarbonsäureestergruppe vorliegen, jedoch sind Thioätherbrücken bevorzugt. Sulfoxid- oder Sulfonbrücken sind bevorzugt mit aromatischen Kohlenstoffatomen verbunden.

Besonders vorteilhaft ist es, wenn die fertigen schwefelhaltigen Polyester bestimmte Gehalte an aromatischen Strukturen, bestimmte Viskositäten, sowie im Falle der epoxymodifizierten Varianten bestimmte Gehalte an Rest-Epoxysauerstoff aufweisen. So sollten im Polyester 20–35 Gew.-%, bevorzugt 22–30 Gew.-% der aromatischen Struktureinheiten

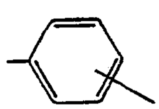

(Molgew. 76) bzw.

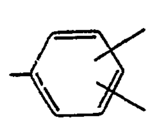

(Molgew. 75)

enthalten sein. Die Viskositäten der schwefelmodifizierten Polyester liegen bevorzugt in einem Bereich von 70–200 sec., gemessen nach DIN 53 211 bei 20° an 70%igen Lösungen in N,N-Dimethylformamid. Im Falle der epoxymodifizierten schwefelhaltigen Polyester sollten zwischen 0,02 und 0,7 Gew.-% Epoxysauerstoff in fertigen Harz verbleiben. Bei Einhaltung dieser Vorzugsbereiche könen so besonders gut verarbeitbare Glasfaserstränge erhalten werden, welche sich durch gute Strangintegrität bei geringer Klebrigkeit und Flusenneigung auszeichnen.

Die erfindungsgemässen schwefelhaltigen Polyester sind selbstemulgierend. Selbstverständlich kann der Dispergiervorgang durch Zugabe wassermischbarer organischer Lösungsmittel, durch Neutralisation der Restsäurezahl mit anorganischen oder organischen basischen Verbindungen oder durch Zusatz anionischer oder nichtionischer Emulgatoren zusätzlich unterstützt werden.

Die Harze können durch Zugabe von entionisiertem Wasser in Dispersionen oder kolloidalen Lösungen mit Festkörpergehalten von 60–5%, vorzugsweise 55–20%, überführt werden.

Aus den wässrigen Dispersionen bzw. Lösungen der Epoxypolyesterharze, Haftvermittlern, Gleitmitteln und Hilfsstoffen, wie Netzmitteln oder Antistatika, werden auf übliche Weise die erfindungsgemässen Schlichten hergestellt, (vgl. z.B. K.L. Loewenstein: The Manufacturing Technology of Continous Glass Fibers, Elsevier Scientific Publishing Copr. Amsterdam, London, New York (1973)). Diese werden auf bekannte Weise, d.h. mit Hilfe geeigneter Vorrichtungen, wie z.B. Sprüh- oder Walzensystemen auf die mit hoher Geschwindigkeit aus Spinndüsen gezogenen Glasfilamente sofort nach ihrem Erstarren, d.h. noch vor dem Aufwickeln, aufgetragen. Es ist aber auch möglich, die Fasern im Anschluss an den Spinnprozess in einem Tauchbad zu beschlichten.

Die beschlichteten feuchten Glasfasern werden anschliessend bei Temperaturen von 90–160°C getrocknet und dann zu Rovings, Matten, Geweben, Schnitt-, Kurzglas usw. verarbeitet. Unter Trocknung ist dabei nicht allein die Entfernung von Wasser und anderen flüchtigen Bestandteilen zu verstehen, sondern auch das Festwerden der Schlichtebestandteile, insbesondere des Filmbildners. Erst nach beendeter Trocknung hat sich die Schlichte in eine feste Überzugsmasse verwandelt.

Das schwefelhaltige (Epoxy)-Polyesterharz ist in einer erfindungsgemässen Schlichte in einer Menge von 0,6–12 Gew.-%, berechnet als Feststoff, enthalten. Konzentrationen unter 0,6 Gew.-% geben auf den Glasfasern einen nur ungenügenden Schutzfilm.

Höhere Konzentrationen als 12 Gew.-% ergeben zu dicke Überzugsschichten, die zu einer Schwächung des aus derartig beschlichteten Glasfasern hergestellten Glasfasern-Polymer-Verbundwerkstoffes führen. Ausserdem empfiehlt es sich aus Kostengründen nicht, noch grössere Mengen Filmbildner auf die Faser aufzubringen. Vorzugsweise wird die Konzentration des schwefelhaltigen (Epoxy)-Polyesterharzes in

einer erfindungsgemässen Schlichte zwischen 1,5 und 7 Gew.-%, bezogen auf Feststoff, gewählt. Der Auftrag einer solchen Schlichte führt erfahrungsgemäss zu einer Beladung der getrockneten Fasern mit Schlichtebestandteilen, d.h. zu einem Schlichtegehalt von etwa 0,2–2 Gew.-%, bezogen auf beschlichtete Fasern, wobei der Filmbildner mengenmässig in der Regel überwiegt.

Schlichtegehalte in dem genannten Bereich werden sowohl vom technischen Standpunkt als auch aus wirtschaftlichen Überlegungen für die erfindungsgemäss beschlichteten Glasfasern für die Verstärkung von ungesättigten Polyesterharzen und Epoxyharzen, aber auch von Thermoplasten, als optimal angesehen. Selbstverständlich können den erfindungsgemässen Schlichten auch noch weitere Filmbildner, wie z.B. vom Polyurethantyp oder vom Polyvinylacetat-Typ beigemengt werden.

Die Konzentration des Silan-Haftvermittlers (wie z.B. Vinyltrimethoxysilan, Vinyltriethoxysilan, Vinyl-tris-(β-methoxy-ethoxy)-silan, γ-Methacryloxypropyltrimethoxysilan, γ-Methacryloxypropyl-tris-(β-methoxyethoxy)-silan,γ-Glycidoxypropyltrimethoxysilan, β-(3,4-Epoxycyclohexyl)-xyl)-ethyltrimethoxysilan) in den erfindungsgemässen Schichten beträgt 0,05–1,5 Gew.-%, vorzugsweise jedoch 0,15–0,85 Gew.-%, bezogen auf die gesamte Schlichte. Konzentrationen über 1,5 Gew.-% sind einerseits wegen der Bildung relativ dicker Silikonschichten auf den Glasfasern, die bekannterweise den Verbund zwischen den Glasfasern und dem zu verstärkenden Kunststoff eher schwächen als verbessern, unerwünscht, und andererseits wegen der teuren Silane auch unwirtschaftlich.

Bei Konzentrationen unter 0,05 Gew.-% ist die Wirksamkeit der Silan-Haftvermittler im allgemeinen nicht ausreichend. Konzentrationen zwischen 0,05 und 0,15 Gew.-% werden dann gewählt, wenn das Aufbringen der Schlichte auf die Glasfasern nicht während des Spinnprozesses, d.h. in Bruchteilen einer Sekunde, sondern beispielsweise durch Tränkung der Glasfasern in einem Schlichtebad erfolgt, was aus praktischen Gründen weitaus längere Zeit erfordert, in welcher eine wesentlich höhere Ausnutzung der Schlichte möglich ist, als beim Auftrag der Schlichte während des Sinnprozesses.

Es ist zweckmässig, in einer erfindungsgemässen Schlichte ein Gleitmittel zu verwenden. Dieses kann aus folgenden Stoffgruppen gewählt werden:

Polyalkylenglykole, höhere Fettsäureester und -amide mit 12–18 C-Atomen, natürliche Wachse, wie z.B. Carnaubawachs, Polyolefindispersionen, wasserlösliche stickstoffhaltige Polymere (z.B. Polyvinylpyrrolidon).

Das Gleitmittel wird vorteilhaft in Konzentrationen zwischen 0,05 und 1 Gew.-%, bezogen auf die gesamte Schlichte, angewendet. Dagegen werden die unteren Konzentrationsbereiche bevorzugt, wenn als Gleitmittel ein Polyalkylenglykol oder ein höheres Fettsäureamid benutzt wird.

Zur Herstellung der erfindungsgemässen beschlichteten Glasfasern sind sowohl die für die Glasseidenfabrikation verwendeten, bekannten Glastypen, wie E-, A-, C- und S-Glas, als auch die bekannten Glasstapelfasererzeugnisse geeignet. Auch für Spezialzwecke entwickelte, sogenannte Hochmodul- und Hochfestigkeitsglasfasern sind verwendbar. Unter den genannten Glastypen für die Herstellung von Endlosglasfasern besitzen die E-Glasfasern die grösste Bedeutung für die Verstärkung von Kunststoffen. Denn im Gegensatz zu A- und C-Glas ist E-Glas nahezu alkalifrei, woraus sich seine guten Elektroisolier-Eigenschaften und seine höhere Beständigkeit bei Einwirkung von Wasser und Alkalien ableitet. Auch bezüglich der Zugfestigkeit und des Elastizitätsmoduls sind E-Glasfasern den A-Glasfasern überlegen.

Die mit den erfindungsgemäsen Glasfasern verstärkten Verbundstoffe können hergestellt werden, indem man die beschlichteten Glasfäden von ungesättigten Polyesterharzen oder Epoxidharzen mit flüssigen Reaktionsharzmassen, die gegebenenfalls Lösungsmittel und/oder andere Zusätze enthalten können, in Tränkbädern, Formen oder durch Sprühen imprägniert und anschliessend gegebenenfalls unter Formgebung in den gehärteten Zustand überführt. Unter Reaktionsharzmassen versteht man verarbeitungsfertige Mischungen aus Reaktionsharzen und Reaktionsmitteln. Reaktionsharze sind flüssige oder schmelzbare Stoffe, die nach Zugabe der Reaktionsmittel, gegebenenfalls unter zusätzlicher Wärmezufuhr, in hochmolekulare, meist vernetzbare Produkte umgewandelt werden.

Neben den bereits aufgeführten Reaktionsmassen von ungesättigten Polyesterharzen und Epoxidharzen können gegebenenfalls auch andere gebräuchliche duroplastische oder thermoplastische Kunststoffe, wie z.B. Phenol-Formaldehyd-Harze, Polyurethane, Polycarbonate, Polyamide, Polybutylenterephthalate, Polyethylenterephthalate und Polyolefine mit den erfindungsgemäss beschlichteten Glasfasern zu glasfaserverstärkten Formkörpern umgesetzt werden. Die Einarbeitung der Glasfasern erfolgt bei den thermoplastischen Kunststoffen, z.B. in Form von Schnittglas oder Rovings, welche in Extrudern mit den aufgeschmolzenen Thermoplasten vermischt und zu Kunststoffgranulat verarbeitet wird. Dieses Granulat dient als Ausgangsbasis zur Herstellung von Formteilen und Gegenständen aus glasfaserverstärktem thermoplastischem Kunststoff.

Die vorliegende Erfindung soll nun anhand der nachfolgenden Ausführungsbeispiele noch näher erläutert werden.

Beispiel 1

a) Herstellung des schwefelhaltigen Epoxypolyesterharzes

Aus 3853,2 g eines Adduktes von 7,9 Mol Propylenoxid an (1 Mol) 4,4′-Thiodiphenol, 300,0 g Polyethylenglykol mit einem mittleren Molekulargewicht von 1000 («Polywachs 1000», Chemische

Werke Hüls) und 525,6 g Adipinsäure wird in einer Stickstoffatmosphäre durch Veresterung bei 190–200°C bis zu einer Säurezahl von ungefähr 20 ein schwefelhaltiges Polyesterharz hergestellt, welches in einer angeschlossenen zweiten Stufe mit 228,0 g eines Epoxyharzes mit einem Epoxyäquivalent von 190 («Lekutherm X 20», Bayer) in Gegenwart von 0,22 g Tetrabutylammoniumiodid bei 140°C bis zu einer Säurezahl von 12,8 zum schwefelhaltigen Epoxypolyester umgesetzt wird. Dieses Produkt enthält ca. 0,26% Epoxid-Sauerstoff. Zur Dispergierung legt man das schwefelhaltige Epoxypolyesterharz bei 60°C vor, neutralisiert die vorliegende Carboxyläquivalente, welche sich aus der Säurezahl errechnen lassen, mit einer äquivalenten Menge Dimethylethanolamin in Form einer 10 %igen wässrigen Lösung und verdünnt anschliessend unter Rühren bei ca. 40°C auf einen Festgehalt von 40 Gew.-% mit destilliertem Wasser. Danach wird über ein 30 000 mesh-Maschensieb filtriert.

b) Zusammensetzung der erfindungsgemässen Schlichte schwefelhaltiges Epoxipolyesterharz nach Beispiel 1 a) (40% Feststoff) 7,50 Gew.-%
γ-Methacryloxypropyl-trimethoxysilan 0,40 Gew.-%
γ-(3,4-Epoxicyclohexyl)-ethyl-trimethoxisilan 0,25 Gew.-%
Polyethylenoxid, Molgew. 4000 (Carbowax, Union Carbide) 0,40 Gew.-%
Polyvinylpyrrolidon 0,20 Gew.-%
Stearinsäureamid-Paste (20% Feststoff) 1,00 Gew.-%
Nonylphenol-polyglykolethersulfat; Na-Salz 0,10 Gew.-%

c) Herstellung der Schlichte
In einem Mischbehälter wird ca. ⅔ der Gesamtmenge Wasser vorgelegt und mit Essigsäure auf pH 3,5 angesäuert. Das γ-Methacryloxypropyltrimethoxysilan wird zugegeben und ca. 15 Min. bis zur kompletten Hydrolyse gerührt. Nun wird der pH-Wert mit Ammoniakwasser auf 4,5 eingestellt, das β-(3,4-Epoxycyclohexyl)-ethyltrimethoxysilan zugegeben und ebenfalls ca. 15 Min. hydrolysiert. Man fügt danach zuerst die schwefelhaltige Epoxypolyesterdispersion, dann die übrigen Zusätze unter gutem Rühren zu. Nach Zugabe der restlichen Wassermenge weist die Schlichte einen pH-Wert von ca. 5 auf. Der Schliohteauftrag auf die E-Glasfaser erfolgte in an sich bekannter Weise mittels Walzen während des Faserziehprozesses. Der Schlichteauftrag des aus 800 Filamenten bestehenden Glasfadens betrug 0,41 Gew.-%.

d) Prüfung der Verstärkungswirkung der erfindungsgemäss beschlichteten Glasfasern in ungesättigtem Polyester
Zur Herstellung der Prüfkörper werden die beschlichteten und 10 Stunden bei 130°C getrockneten Glasfasern in Form von Roving-Strängen (2400 tex) in paralleler Lage mit der 60 %igen styrolischen Lösung eines ungesättigten Polyesterharzes imprägniert und dann mit konstanter Geschwindigkeit in ein Teflonrohr eingezogen. Das imprägnierte Harz ist ein ungesättigtes Polyesterharz auf der Grundlage von Oligo-Propylenglykol-phthalatmaleaten («Leguval(R) W 16», Bayer). Das im Glasrohr befindliche Material wird auf bekannte Weise mittels Benzoylperoxid gehärtet. Man erhält so unidirektional verstärkte, ca. 5,8 mm dicke Rundstäbe, Länge = 80 mm (DIN 53 390). Der Glasfaseranteil beträgt 60 Gew.-%. An 10 derartigen Prüfkörpern wird nach DIN 53 454 die Biegefestigkeit als Mittelwert der 10 Messungen bestimmt. Nach 6stündiger Behandlung in siedendem Wasser bestimmt man den prozentualen Abfall der Biegefestigkeit an weiteren 10 Prüfkörpern gegenüber den gemittelten Trockenbiegefestigkeitswerten. Dieser prozentuale Abfall der Biegefestigkeit ist ein Mass für die in der Praxis der glasfaserverstärkten Kunststoffe besonders wichtige Erhaltung der gewünschten mechanischen Festigkeit der Verbundwerkstoffe bei bzw. nach Einwirkung von Wasser bzw. bei Bewitterung.

Biegefestigkeit:
σbB: 1349 N/mm²

Prozentualer Abfall der Biegefestigkeit nach Wasserlagerung: 6,0%.

Beispiel 2
a) Herstellung des schwefelhaltigen Epoxypolyesterharzes
Aus 3126,5 g eines Adduktes von 7,9 Mol Propylenoxid an (1 Mol) 4,4'-Thiodiphenol 375 g Polyethylenglykol mit einem mittleren Molekulargewicht von 1000 und 438 g Adipinsäure wird in einer Stickstoffatmosphäre durch Veresterung bei 190–200°C bis zu einer Säurezahl von 14 ein schwefelhaltiges Polyesterharz hergestellt, welches in einer angeschlossenen zweiten Stufe mit 638 g eines Epoxyharzes auf Basis Bisphenol A-Glycidylether mit einem Epoxyäquivalentgewicht von 618 g in Gegenwart von 1,15 g Tetrabutylammoniumjodid bei 140°C bis zu einer Säurezahl von 3,8 umgesetzt. Dieser schwefelhaltige Epoxypolyester enthält ca. 0,20% Epoxidsauerstoff. Zur Dispergierung legt man den Epoxypolyester bei 50°C vor und gibt unter gutem Rühren pro kg Harz 60,4 g einer 10%igen wässrigen Lösung von Dimethylethanolamin zu und verdünnt anschliessend portionsweise mit einer solchen Menge destiliertem Wasser, dass die resultierende Dispersion einen Festkörpergehalt von ca. 31% aufweist. Schliesslich wird über ein 30 000 mesh-Maschensieb filtriert.

b) Zusammensetzung der Schlichte:

Schwefelhaltiges Epoxipolyesterharz nach Beispiel 2a) (31% Feststoff) 9,7 Gew.-%
γ-Methacryloxypropyl-trimethoxisilan 0,40 Gew.-%

γ-(3,4-Epoxicyclohexyl)-ethyl-trimethoxisilan 0,25 Gew.-%
Polyethylenoxid, Molgew. 4000 0,2 Gew.-%
Stearinsäureamid-Paste (20% Feststoff) 2,0 Gew.-%
bisethoxiliertes, fettsäurehaltiges Ammoniummethosulfat 0,15 Gew.-%

c) Die Herstellung der Schlichte erfolgt analog Beispiel 1 c).

d) Festigkeitsbestimmung analog Beispiel 1 d) ergab folgende Werte:

$\sigma bB = 1393 \pm 61$ N/mm²

Abfall nach Wasserlagerung: 1,9% bezogen auf die Trockenfestigkeit.

Beispiel 3

a) Herstellung eines schwefelhaltigen Epoxipolyesterharzes:

Aus 3154,5 g eines Adduktes von 8,3 Mol Propylenoxid an (1 Mol) 4,4′-Thiodiphenol, 500 g Polyethylenglykol mit einem mittleren Molekulargewicht von 1000 und 556,3 g Adipinsäure wird in einer Stickstoffatmosphäre durch Veresterung bei 190–200°C bis zu einer Säurezahl von 5 ein schwefelhaltiges Polyesterharz hergestellt, welches danach in einer zweiten Stufe mit 239,5 g Tetrahydrophthalsäureanhydrid bei 140°C bis zu einer Erhöhung der Säurezahl auf einen Wert von 25,5 umgesetzt und zuletzt in einer dritten Stufe nach Zugabe von ca. 1,15 g Tetrabutylammoniumiodid bei 140°C mit 437 g eines Epoxyharzes mit einem Epoxy-Äquivalenzgewicht von 190 bis zu einer End-Säurezahl von ca. 9 zur Reaktion gebracht wird. Das Epoxypolyesterharz enthält ca. 0,4% Epoxidsauerstoff.

Zur Dispergierung legt man das Harz bei 60°C vor, gibt unter gutem Rühren pro kg Harz 142,8 g einer 10%igen wässrigen Lösung von Dimethylethanolamin zu, verdünnt danach portionsweise mit einer solchen Menge destilliertem Wasser, dass die resultierende Dispersion einen Festkörpergehalt von ca. 25% aufweist, und filtriert über ein 30 000 mesh-Maschensieb.

b) Zusammensetzung der Schlichte:

Schwefelhaltiges Epoxypolyesterharz nach Beispiel 3a) (30% Feststoff) 3,3 Gew.-%
γ-Methacryloxypropyl-trimethoxysilan 0,4 Gew.-%
γ-(3,4-Epoxycyclohexyl)-ethyl-trimethoxysilan 0,25 Gew.-%
Polyethylenoxid, Molgew. 4000 0,16 Gew.-%
Stearinsäureamid-Paste (Feststoff 20%) 1,60 Gew.-%
bisethoxyliertes, fettsäurehaltiges Ammoniummethosulfat 0,125 Gew.-%
Mineralölzubereitung 0,16 Gew.-%

c) Die Herstellung der Schlichte erfolgt analog Beispiel 1 c). Der Schlichteauftrag des aus 2000-Filamenten bestehenden Glasfadens betrug 0,28 Gew.-% bezogen auf die beschlichtete Faser.

d) Die Festigkeitsbestimmung analog Beispiel 1 d) ergab folgende Werte:

$\sigma bB = 1226 \pm 36$ N/mm²

Abfall nach Wasserlagerung: 1,4% bezogen auf die Trockenfestigkeit

e) Werden analog Beispiel 1 d) die Rovingstränge anstelle von ungesättigten Polyesterharz/Styrol mit Epoxidharz/Amin imprägniert und gehärtet, so wird bei Verwendung eines aromatischen Diepoxides (Lekutherm®X-551, Bayer) und Pentaethylenhexamin (Härter T 3, Bayer) im Gewichtsverhältnis 4:1 folgende Festigkeit (Nachhärtung 3 h/120°) des Rundstabes erhalten:

$\sigma bB = 1189 \pm 100$ N/mm₂

Abfall nach Wasserlagerung: 11,6% bezogen auf die Trockenfestigkeit.

Beispiel 4

a) Zur Herstellung eines sulfonhaltigen Epoxipolyesterharzes:

Aus 3437,1 g eines Adduktes von 6,1 Mol Propylenoxid an (1 Mol) 4,4′-Solfondiphenol, 300 g Polyethylenglykol mit einem mittleren Molekulargewicht von 1000 und 525,6 g Adipinsäure wird in einer Stickstoffatmosphäre durch Veresterung bei 190–200°C bis zu einer Säurezahl von 20 ein sulfongruppenhaltiges Polyesterharz hergestellt, das in einer zweiten Reaktionsstufe in Gegenwart von 1,4 g Tetrabutylammoniumiodid bie 140°C bis zu einer Säurezahl von 11 mit 228 g eines Epoxyharzes mit einem Epoxy-Äquivalenzgewicht von 190 umgesetzt. Das fertige Epoxypolyesterharz enthält ca. 0,28% Epoxid-Sauerstoff.

Zur Dispergierung legt man das Harz bei 60°C vor, gibt unter gutem Rühren pro kg Harz 180 g einer 10 Gew.-% Dimethylethanolamin und 10 Gew.-% Polyvinylalkohol (Moviol-4-98 von Hoechst) enthaltenden Lösung zu, rührt danach pro kg zu dispergiertem Harz 50 g einer 50%igen wässrigen Lösung eines Emulgators, erhalten aus einem sich aus einer Phenol- und 2,8-«Styrol»-Einheiten zusammensetzenden Polyethylphenylphenol durch Addition von 54 Mol Ethylenoxid/Mol zu und verdünnt danach portionsweise mit einer solchen Menge destilliertem Wasser, dass die resultierende Dispersion einen Festkörpergehalt von ca 30% aufweist, und filtriert über ein 30 000 mesh-Maschensieb.

b) Zusammensetzung der Schlichte analog Beispiel 3 mit 4,3 Gew.-% sulfonhaltiges Epoxipolyesterharz nach Beispiel 4 a) (30% Feststoff).

c) Die Herstellung der Schlichte erfolgt analog 1 c). Der Schlichteauftrag des aus 800 Filamenten

bestehenden Glasfadens betrug 0,33 Gew.-% bezogen auf die beschlichtete Faser.

d) Die Festigkeitsbestimmung analog Beispiel 1 d) und 3 d) ergab folgende Werte:

UP-Harz: $\sigma bB = 1123 \pm 46$ N/mm²
Abfall nach Wasserlagerung: 1,9%
EP-Harz: $\sigma bB = 1068 \pm 87$ N/mm²
Abfall nach Wasserlagerung: 14,7%

Die Rundstäbe weisen eine sehr gute Transparenz auf.

**Patentansprüche**

1. Wässrige Schlichtemittel für Glasfasern, welche als Filmbildner in Wasser emulgierbare mit Polyethereinheiten modifizierte Polyester enthalten, dadurch gekennzeichnet, dass die Polyester 0,1-12 Gew.-%, bevorzugt 1-5 Gew.-%, bezogen auf das Gesamtgewicht des fertigen Polyesters, chemisch gebundenen Schwefel in Form von Thioether-, Sulfoxid- und/oder Sulfonbrücken enthalten.

2. Schlichtemittel für Glasfasern gemäss Anspruch 1, dadurch gekennzeichnet, dass die Polyester zusätzlich mit Epoxygruppen modifiziert sind und durch Kondensation von 3-40 Gew.-% mehr als eine Epoxygruppe pro Molekül enthaltenden Verbindungen mit 97-60 Gew.-% eines polyethermodifizierten Polyesters bis zu einem Restgehalt an Epoxysauerstoff von 0,02-0,7 Gew.-%, bevorzugt 0,05-0,5 Gew.-%, erhalten werden.

3. Schlichtmittel für Glasfasern gemäss einem der Ansprüche 1 oder 2, dadurch gekennzeichnet, dass die modifizierten Polyester 4-13 Gew.-% Polyethylenoxideinheiten mit Molgewichten zwischen 370 und 3000 und 25-60 Gew.-% Polypropylenoxideinheiten mit Molgewichten von 116-2000 einkondensiert enthalten.

4. Mit einer dünnen Beschichtung auf ihren Oberflächen geschlichtete Glasfasern, dadurch gekennzeichnet, dass die Beschichtung auf der Faser mit einer Schlichte gemäss einem der Ansprüche 1-3 erhalten wurde.

5. Glasfaserverbundwerkstoffe auf Basis von Epoxyharzen und/oder ungesättigten Polyesterharzen, dadurch gekennzeichnet, dass die Glasfasern mit einer Schlichte gemäss einem der Ansprüche 1-3 beschlichtet wurde.

6. Glasfaserverbundwerkstoffe auf Basis thermoplastischer Kunststoffe, dadurch gekennzeichnet, dass die Glasfasern mit einer Schlichte gemäss einem der Ansprüche 1-3 beschlichtet wurden.

**Claims**

1. Aqueous sizes for glass fibres, which contain as the film formers polyesters which can be emulsified in water and are modified with polyether units, characterised in that the polyesters contain 0.1-12% by weight, preferably 1-5% by weight, based on the total weight of the finished polyester, of chemically bonded sulphur in the form of thioether, sulphoxide and/or sulphone bridges.

2. Sizes for glass fibres according to Claim 1, characterised in that the polyesters are additionally modified with epoxy groups and are obtained by condensing 3-40% by weight of compounds containing more than one epoxy group per molecule with 97-60% by weight of a polyether-modified polyester until there is a remaining content of 0.02-0.7% by weight, preferably 0.05-0.5% by weight of epoxy oxygen.

3. Sizes for glass fibres according to one of Claims 1 or 2, characterised in that the modified polyesters contain, incorporated therein by condensation, 4-13% by weight of polyethylene oxide units having molecular weights between 370 and 3,000 and 25-60% by weight of polypropylene oxide units having molecular weights of 116-2,000.

4. Glass fibres sized on their surfaces with a thin coating, characterised in that the coating on the fibre has been obtained using a size according to one of Claims 1-3.

5. Glass fibre composite materials based on epoxy resins and/or unsaturated polyester resins, characterised in that the glass fibres have been coated with a size according to one of Claims 1-3.

6. Glass fibre composite materials based on thermoplastic materials, characterised in that the glass fibres have been coated with a size according to one of Claims 1-3.

**Revendications**

1. Produits d'ensimage aqueux pour fibres de verre contenant en tant qu'agents filmogènes des polyesters modifiés à motifs de polyéthers émulsionnables dans l'eau, caractérisés en ce que les polyesters contiennent de 0,1 à 12% en poids, de préférence de 1 à 5% en poids, par rapport au poids total du polyester fini, de soufre combiné chimiquement sous la forme de ponts thioéther, sulfoxyde et/ou sulfone.

2. Produits d'ensimage pour fibres de verre selon la revendication 1, caractérisés en ce que les polyesters sont en outre modifiés par des groupes époxy et ont été obtenus par condensation de 3 à 40% en poids de composés contenant plus d'un groupe époxy par molécule avec 97 à 60% en poids d'un polyester à modification polyéther jusqu'à une teneur résiduelle en oxygène d'époxyde de 0,02 à 0,7% en poids, de préférence de 0,05 à 0,5% en poids.

3. Produits d'ensimage pour fibres de verre selon l'une des revendications 1 ou 2, caractérisés en ce que les polyesters modifiés contiennent de 4 à 13% en poids de motifs d'oxyde de polyéthylène ayant des poids moléculaires de 370 à 3000 et de 25 à 60% en poids de motifs d'oxyde de polypropylène ayant des poids moléculaires de 116 à 2000, à l'état condensé.

4. Fibres de verre ensimées sur leurs surfaces par un revêtement mince, caractérisées en ce

que le revêtement a été obtenu sur les fibres à l'aide d'un produit d'ensimage selon l'une des revendications 1 à 3.

5. Matériaux composites contenant des fibres de verre, à base de résines époxydiques et/ou de résines de polyesters insaturés, caractérisés en ce que les fibres de verre ont été ensimées à l'aide d'un produit d'ensimage selon l'une des revendications 1 à 3.

6. Matériaux composites contenant des fibres de verre à base de résines synthétiques thermoplastiques, caractérisés en ce que les fibres de verre ont été ensimées à l'aide d'un produit d'ensimage selon l'une des revendications 1 à 3.